(19) Europäisches Patentamt
European Patent Office
Office européen des brevets

(11) Veröffentlichungsnummer: **0 372 336 B1**

(12) **EUROPÄISCHE PATENTSCHRIFT**

(45) Veröffentlichungstag der Patentschrift: **25.01.95**

(51) Int. Cl.6: **C08L 69/00**, C08L 67/02, C08L 51/04, C08L 25/08

(21) Anmeldenummer: **89121821.6**

(22) Anmeldetag: **25.11.89**

(54) **Hochschlagzähe Polycarbonat-Formmassen.**

(30) Priorität: **09.12.88 DE 3841530**

(43) Veröffentlichungstag der Anmeldung:
**13.06.90 Patentblatt 90/24**

(45) Bekanntmachung des Hinweises auf die Patenterteilung:
**25.01.95 Patentblatt 95/04**

(84) Benannte Vertragsstaaten:
**DE FR GB IT NL**

(56) Entgegenhaltungen:
**EP-A- 0 206 006**
**EP-A- 0 210 510**
**EP-A- 0 244 856**
**DE-A- 3 332 325**

(73) Patentinhaber: **BAYER AG**

**D-51368 Leverkusen (DE)**

(72) Erfinder: **Wittmann, Dieter, Dr.**
**Wolfskaul 4**
**D-5000 Köln 80 (DE)**
Erfinder: **Leitz, Edgar, Dr.**
**Goethestrasse 63**
**D-4047 Dormagen 1 (DE)**
Erfinder: **Morbitzer, Leo, Dr.**
**Rungestrasse 50**
**D-5000 köln 80 (DE)**
Erfinder: **Peters, Horst, Dr.**
**Winterberg 25**
**D-5090 Leverkusen 3 (DE)**
Erfinder: **Schoeps, Jochen, Dr.**
**Windmühlenstrasse 126**
**D-4150 Krefeld 1 (DE)**
Erfinder: **Ott, Karl-Heinz, Dr.**
**Paul-Klee-Strasse 54**
**D-5090 Leverkusen 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Gegenstand der vorliegenden Erfindung sind thermoplastische Formassen, enthaltend

A.

5 bis 98 Gew.-Tl., vorzugsweise 20 bis 95 Gew.-Tl., besonders bevorzugt 40 bis 90 Gew.-Tl. eines aromatischen Polycarbonats und/oder eines aromatischen Polyestercarbonats, und / oder eines aromatischen Polyesters und

B.

2 bis 70 Gew.-Tl., vorzugsweise 5 bis 60 Gew.-Tl., besonders bevorzugt 10 bis 50 Gew.-Tl. eines oder mehrerer Propfpolymerisate aus

B.1

10 bis 95 Gew.-Tl., vorzugsweise 20 bis 70 Gew.-Tl. einer vernetzten, teilchenförmigen elastomeren Pfropfgrundlage mit einem durchnittlichen Teilchendurchmesser ($d_{50}$-Wert) von 0,05 bis 5 $\mu$m, vorzugsweise 0,075 bis 1 $\mu$m und einer Glasübergangstemperatur $\leqq$10 °C, vorzugsweise $\leqq$-20 °C und

B.2

90 bis 5 Gew.-Tl., vorzugsweise 80 bis 30 Gew.-Tl., einer Pfropfauflage aus Vinylmonomerpolymerisat, wobei die Pfropfauflage erhalten wurde durch Pfropfpolymerisation einer Monomermischung aus

B.2.1

50 bis 85 Gew.-Tl. Styrol, $\alpha$-Methylstyrol, kernsubstituiertem Styrol, Methylmethacrylat, oder Mischungen daraus, und

B.2.2

50 bis 15 Gew.-Tl. (Meth)-Acrylnitril, Methylmethacrylat, Maleinsäureanhydrid, N-substituiertem Maleinimid, oder Mischungen daraus, und

C.

0 bis 80 Gew.-Tl., vorzugsweise 5 bis 50 Gew.-Tl. eines thermoplastischen Copolymerisats aus

C.1

50 bis 85 Gew.-Tl. Styrol, $\alpha$-Methylstyrol, kernsubstituiertem Styrol, Methylmethacrylat, oder Mischungen daraus, und

C.2

50 bis 15 Gew.-Tl. (Meth)-Acrylnitril, Methylmethacrylat, Maleinsäureanhydrid, N-substituiertem Maleinimid, oder Mischungen daraus, wobei die Summe der Gew.-Tl. aus A. und B. + gebebenenfalls C. jeweils 100 Gew.-Tl. beträgt, sowie gegebenenfalls wirksame Mengen an Stabilisatoren, Pigmenten, Fließmitteln, Entformungsmitteln, Flammschutzmitteln und/oder Antistatika,

dadurch gekennzeichnet, daß in den Formmassen A. bis C. mindestens eine der Maßnahmen a. und b. erfüllt ist:

a.

mindestens 10 Gew.-%, vorzugsweise mindestens 50 Gew.-%, besonders bevorzugt 100 Gew.-% der Komponente B. sind ersetzt durch ein Pfropfpolymerisat B* aus

B.*1

10 bis 95 Gew.-Tl., vorzugsweise 20 bis 70 Gew.-Tl. einer vernetzen, teilchenförmigen elastomeren Pfropfgrundlage mit einem durchschnittlichen Teilchendurchmesser ($d_{50}$-Wert) von 0,05 bis 5 $\mu$m, vorzugsweise 0,075 bis 1 $\mu$m und einer Glasübergangstemperatur $\leqq$10 °C, vorzugsweise $\leqq$-20 °C und

B.*2

90 bis 5 Gew.-Tl., vorzugsweise 80 bis 30 Gew.-Tl. einer Pfropfauflage aus Vinylmonomerpolymerisat, wobei die Pfropfauflage erhalten wurde durch Pfropfpolymerisation einer Monomerischung aus

B.*2.1

86 bis 99,5 Gew.-Tl., bevorzugt 91 bis 98 Gew.-Tl. Styrol, $\alpha$-Methylstyrol, kernsubstituiertem Styrol, oder Mischungen daraus, vorzugsweise Styrol, und

B.*2.2

0,5 bis 14 Gew.-Tl., bevorzugt 2 bis 9 Gew.-Tl., (Meth)Acrylnitril, Methylmethacrylat, Maleinsäureanhydrid, N-substituiertem Maleinimid, oder Mischungen daraus, vorzugsweise Acrylnitril.

b.

mindestens 10 Gew.-%, vorzugsweise mindestens 50 Gew.-%, besonders bevorzugt 100 Gew.-%, der Komponente C sind ersetzt durch ein thermoplastisches Copolymerisat C* aus

C.*1

86 bis 99,5 Gew.-Tl., bevorzugt 91 bis 98 Gew.-Tl. Styrol, $\alpha$-Methylstyrol, kernsubstituiertem Styrol, oder Mischungen daraus, vorzugsweise Styrol, und

C.*2

0,5 bis 14 Gew.-Tl., bevorzugt 2 bis 9 Gew.-Tl. (Meth)Acrylnitril, Methylmethacrylat, Maleinsäureanhydrid, N-substituiertem Maleinimid, oder Mischung daraus, vorzugsweise Acrylnitril.

Vorzugsweise sind sowohl Maßnahme a als auch Maßnahme b gleichzeitig erfüllt.

Thermoplastische Formmassen aus Polycarbonaten und ABS-Polymerisaten sind seit langem bekannt. So beschreibt DE 1 170 141 gut verarbeitbare Formmassen aus Polycarbonaten und Pfropfpolymerysaten von Monomermischungen aus Acrylnitril und einem aromatischen Vinylkohlenwasserstoff auf Polybutadien.

In der DE 1 810 993 wird die verbesserte Wärmestandfestigkeit von Polycarbonat in Abmischung mit ABS-Pfropfpolymerisaten bzw. Copolymerisaten auf Basis von $\alpha$-Methylstyrol hervorgehoben.

Gegenstand der DE 22 59 565 und DE 23 29 548 ist die verbesserte Fließnahtfestigkeit von PC/ABS-Formmassen, wobei in beiden Schriften als Bestandteil der ABS-Komponente jeweils Pfropfpolymerisate bestimmter Teilchengröße verwendet werden.

Laut DE 23 29 585 sind hydrolysestabile, hochwärmebeständige Formmassen aus Gemischen von Polycarbonaten auf Basis von >50 % alkylsubstituierten Diphenolen mit ABS-Komponenten aus thermoplastischen Harzen und Pfropfpolymerisaten auf Kautschuk zugänglich.

Die DE 28 18 679 lehrt, daß PC/ABS-Mischungen dann besonders hohe Tieftemperaturzähigkeiten aufweisen, wenn das ABS-Polymerisat zwei Pfropfmischpolymerisate mit unterschiedlichem Pfropfgrad enthält.

Der Zusatz von Modifikatoren auf Basis von Polyacrylaten, Polyolefinen, kautschukartigen Dienpolymerisaten oder Styrolpolymerisaten oder Mischungen davon zu aromatischen Copolyestercarbonaten zur Verbesserung der Zähigkeit ist bekannt (s. z.B. EP 0 119 311).

Überraschenderweise wurde nun gefunden, daß sich das Zähigkeitsniveau sowohl bei Raumtemperatur als auch bei tiefen Temperaturen von an sich bekannten Polycarbonat /ABS bzw. Polyestercarbonat /ABS bzw. Polyester/ABS-Formmassen (EP-A-206 006, EP-A-210 510, EP-A-244 856 dann wesentlich verbessern läßt, wenn im ABS-Anteil die Komponenten B (Pfropfpolymerisat) und/oder C (Copolymerisat) teilweise oder ganz ersetzt sind durch solche, in denen die Pfropfauflage B*.2 und/oder das Copolymerisat C* aus >85 Gew.-%, bevorzugt >90 Gew.-% Vinylaromaten (B*.2.1 und C*.1) und zu < 15 Gew.-%, bevorzugt <10 Gew.-% weiteren Comonomeren wie Meth(Acrylnitril, Methylmethacrylat etc. (B*.2.2 und C*.2) aufgebaut ist.

Die hier in Rede stehenden Polycarbonate und/oder Polyestercarbonate und/oder aromatischen Polyester sind literaturbekannt oder nach literaturbekannten Verfahren herstellbar (s. dazu beispielsweise Schnell, "Chemistry and Physics of Polycarbonates", Interscience Publishers, 1964, DE-AS 1 495 626, DE-OS 2 232 877, DE-OS 2 703 376, DE-OS 3 000 610, DE-OS 2 714 544, DE-OS 2 940 024 und DE-OS 3 007 934). Besonders bevorzugt ist das Phasengrenzflächenverfahren.

Die Herstellung der Polycarbonate und/oder Polyestercarbonate und/oder Polyester erfolgt in bekannter Weise z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen, und gegebenenfalls unter Mitverwendung von trifunktionellen oder mehr als trifunktionellen Verzweigern, beispielsweise Triphenolen oder Tetraphenolen. [Für die Herstellung von aromatischen Polycarbonaten s. beispielsweise Schnell, loc.cit., S. 33 ff; für die Herstellung von aromatischen Polyestern s. beispielsweise DE-OS 2 940 024 (Le A 19 932) und für die Herstellung von aromatischen Polyestercarbonaten s. beispielsweise DE-OS 3 007 934 (Le A 20 203)].

Diphenole zur Herstellung der Polycarbonate und/oder Polyestercarbonate und/oder Polyester sind vorzugsweise solche der Formel I

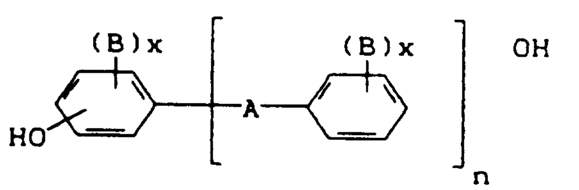

(I)

worin

"A" eine Einfachbindung, ein $C_1$-$C_5$-Alkylen, ein $C_2$-$C_5$-Alkyliden, ein $C_5$-$C_6$-Cycloalkyliden, -O-, -SO-,

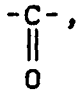

-S-,

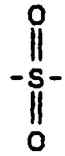

oder ein Rest der Formel (II)

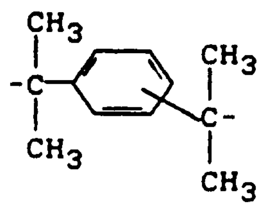

(II)

"B" Chlor, Brom
"X" 0, 1 oder 2 und "n" 1 oder 0 sind.

Bevorzugte Diphenole sind somit Hydrochinon, Resorcin, Dihydroxydiphenyle, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfide, Bis-(hydroxyphenyl)-sulfone und $\alpha,\alpha$-Bis-(hydroxyphenyl)-diisopropylbenzole sowie deren kernbromierte und/oder kernchlorierte Derivate.

Die wichtigen Diphenole sind Bisphenol-A, 2,4-Bis-(4-hydroxyphenyl)-2-methylbutan, 1,1-Bis-(4-hydroxyphenyl)-cyclohexan, 4,4'-Dihydroxydiphenylsulfid, 4,4'-Dihydroxydiphenylsulfon sowie deren di- und tetrabromierten oder chlorierten Derivate wie 2,2-Bis-(3-chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Besonders bevorzugt ist 2,2- Bis-(4-hydroxyphenyl)-propan (Bisphenol-A).

Es können die Diphenole einzeln oder als beliebige Mischungen eingesetzt werden.

Die Diphenole sind literaturbekannt oder nach Literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 (Le A 19 006) oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-% und 10 Mol-%, bezogen auf die Molsumme der jeweils eingesetzten Diphenole.

Die thermoplastischen, aromatischen Polycarbonate haben mittlere Gewichtsmittelmolekulargewichte ($\overline{M}w$, gemessen z.B. durch Ultrazentrifugation oder Streulichtmessung) von 10 000 bis 200 000, vorzugsweise von 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzen Diphenole, an drei- oder mehr als dreifunktionellen Verbindungen, beispielsweise solchen mit drei oder mehr als drei phenolischen Gruppen.

Geeignet sind sowohl Homopolycarbonate als auch Copolycarbonate. Zur Herstellung erfindungsgemäßer Copolycarbonate A) können auch 1 bis 25 Gew.-%, vorzugsweise 2,5 bis 25 Gew.-% (bezogen auf die Gesamtmenge an einzusetzenden Diphenolen), Diphenole der Formel (III) verwendet werden,

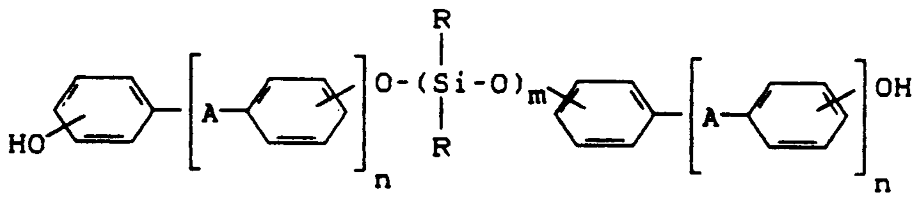

(III)

worin

-A- die für Formel (I) genannte Bedeutung hat, n 1 oder null ist, die R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und m eine ganze Zahl zwischen 5 und 100, vorzugsweise zwischen 20 und 80 ist. Polydiorganosiloxane mit Hydroxy-aryloxy-Endgruppen gemäß Formel (III) sind bekannt (s. beispielsweise US-Patent 3 419 634) bzw. nach literaturbekannten Verahren herstellbar. Die Herstellung Polydiorganosiloxanhaltiger Copolycarbonate wird z.B. in DE-OS 3 334 782 beschrieben.

Bevorzugte Polycarbonate sind neben den Bisphenol A-Homopolycarbonaten die Copolycarbonate von Bisphenol A mit bis zu 15 Mol-%, bezogen auf die Molsummen an Diphenolen, an den anderen der wichtigsten Diphenole, insbesonder an 2,2-Bis-(3,5-dibrom-4-hydroxyphenyl)-propan.

Aromatische Dicarbonsäuredihylogenide zur Herstellung der thermoplastischen, aromatischen Polyester und thermoplastischen, aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1 : 20 und 20 : 1.

Für die Herstellung der aromatischen Polyester werden die Dicarbonsäuredihalogenide als einzige bifunktionelle Säurederivate verwendet; bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyester und Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrechern auf Mole Dicarbonsäuredichloride.

Die aromatischen Polyester und Polyestercarbonate können auch aromatische Hydroxycarbonsäuren eingebaut enthalten.

Die aromatischen Polyester und aromatischen Polyestercarbonate können sowohl linear als auch in bekannter Weise verzweigt sein. (S. dazu ebenfalls DE-OS 2 940 024 und DE-OS 3 007 934.)
Als Verzweigungsmittel können beispielsweise 3- oder mehrfunktionelle Carbonsäurechloride, wie Trimesinsäuretrichlorid, Cyanursäuretrichlorid, 3,3', 4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phoroglucin, 4,6-Dimethyl-2,4,6-tri-(4-hydroxyphenyl)-hepten-2, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis (2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4''-dihydroxytriphenyl)-methyl]-benzol, in Mengen von 0,01 bis 1,0 Mol% (bezogen auf eingesetzte Diphenole) verwendet werden.
Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren.

Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen.

Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polyester und aromatischen Polyestercarbonate liegt im Bereich 1,18 bis 1,4, vorzugsweise 1,22 bis 1,3 (gemessen an Lösungen von 0,5 g Polyestercarbonat in 100 ml $CH_2Cl_2$-Lösung bei 25 °C).

Die thermoplastischen, aromatischen Polycarbonate und/oder Polyestercarbonate und/oder Polyester können allein oder im beliebigen Gemisch untereinander eingesetzt werden.

Zur Herstellung der Pfropfpolymerisate B. geeignete Kautschuke sind insbesondere Polybutadien, Butadien/Styrol-Copolymerisate mit bis zu 30 Gew.-%, bezogen auf Kautschuk, eines niederen Alkylesters der Acryl- oder Methacrylsäure (beispielsweise Methylmethacrylat, Ethylacrylat, Methylacrylat oder Ethylmethacrylat), Polyisopren, Polychloropren, Alkylacrylatkautschuke auf der Basis von $C_1$-$C_8$-Alkylacrylaten, insbesondere Ethyl-, Butyl-, Ethylhexylacrylat. Die Alkylacrylatkautschuke können gegebenenfalls bis zu 30 Gew.-%, bezogen auf Kautschuk, Monomere wie Vinylacetat, Acrylnitril, Styrol, Methylmethacrylat und/oder Vinylether copolymerisiert enthalten. Sie können kleinere Mengen, vorzugsweise bis zu 5 Gew.-%, bezogen auf Kautschuk, vernetzend wirkender ethylenisch ungesättigter Monomeren einpolymerisiert enthalten. Solche Vernetzer sind z.B. Alkylendiol-di(meth)-acrylate, Polyesterdi-(meth)-acrylate, Divinylbenzol, Trivinylbenzol, Triallylcyanurat, Allyl-(meth)-acrylat, Butadien und Isopren. Geeignete Acrylatkautschuke sind auch Produkte, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und einen Acrylatkautschukmantel enthalten. Andere geeignete Kautschuke sind z.B. EPDM-Kautschuke, also Kautschuke aus Ethylen, Propylen und einem unkonjugierten Dienmonomer sowie Silikonkautschuke mit pfropfaktiven Stellen, wie z.B. in den DE 36 31 540 und 36 31 539 beschrieben.

Bevorzugte Kautschuke zur Herstellung der Pfropfpolymerisate B. sind Dien- und Alkylacrylatkautschuke.

Die Kautschuke liegen im Pfropfpolymerisat B. in Form wenigstens partiell vernetzter Teilchen eines mittleren Durchmessers von 0,05 bis 5 µm, insbesondere 0,075 bis 1 µm vor. Die Pfropfpolymerisate B. können durch radikalische Pfropfpolymerisation der eingangs definierten Monomerengemische B.2 in Gegenwart der zu pfropfenden Kautschuke B.1 hergestellt werden. Bevorzugte Herstellungsverfahren für die Pfropfpolymerisate B. sind Emulsion-, Lösungs-, Masse-oder Suspensionspolymerisation. Besonders bevorzugte Pfropfpolymerisate B. sind ABS-Pfropfpolymerisate. Als kernsubstituierte Styrole seien Halogenstyrole und p-Methylstyrol erwähnt.

Bevorzugte Copolymerisate C. sind solche aus wenigstens einem der Monomeren Styrol, α-Methylstyrol, kernsubstituierten Styrol, Methylmethacrylat gemäß C.1 mit wenigstens einem der Monomeren Acrylnitril, Methacrylnitril, Methylmethacrylat, Maleinsäureanhydrid, N-subst.-Maleinimid gemäß C.2.

Copolymerisate C. entstehen häufig bei der Pfropfpolymerisation zur Herstellung der Komponente B. als Nebenprodukte, besonders dann, wenn große Mengen Monomere auf kleine Mengen Kautschuke gepfropft werden.

Die erfindungsgemäß einzusetzende Menge an Copolymerisat C. von 0 bis 80 Gew.-Tl., bezogen auf 100 Gew.-Tl. des Gemischs aus A. + B + C., bezieht diese Nebenprodukte der Pfropfpolymerisation nicht mit ein.

Die Copolymerisate C. sind harzartig, thermoplastisch und kautschukfrei. Besonders bevorzugte Copolymerisate C. sind solche aus Styrol und/oder α-Methylstyrol mit Acrylnitril und gegebenenfalls mit Methylmethacrylat.

Besonders bevorzugte Gewichtsverhältnisse im thermoplastische Copolymerisat C. sind 60 bis 80 Gew.-% C.1 und 40 bis 20 Gew.-% C.2.

Die Copolymerisate C. können durch radikalische Polymerisation, insbesondere durch Emulsions-, Suspensions-, Lösungs- oder Massepolymerisation hergestellt werden. Sie besitzen vorzugsweise Molekulargewichte $\overline{M}_w$ (Gewichtsmittel, ermittelt durch Lichtstreuung oder Sedimentation) von 15 000 bis 200 000.

Die zur Herstellung der Pfropfpolymerisate B* geeigneten Kautschuke B.*1 sind identisch mit den weiter oben bei B. erwähnten, d.h. geeignet sind insbesonder Polybutadien, Butadien/Styrol-Copolymerisate mit bis zu 30 Gew.-%, bezogen auf Kautschuk, eines niederen Alkylesters der Acryl- oder Methacrylsäure (beispielsweise Methylmethacrylat, Ethylacrylat, Methylacrylat oder Ethylmethacrylat), Polyisopren, Polychloropren, Alkylacrylatkautschuke auf der Basis von $C_1$-$C_8$-Alkylacrylaten, insbesondere Ethyl-, Butyl, Ethylhexylacrylat. Die Alkylacrylatkautschuke können gegebenenfalls bis zu 30 Gew.-%, bezogen auf Kautschuk, Monomere wie Vinylacetat, Acrylnitril, Styrol, Methylmethacrylat und/oder Vinylether copolymerisiert enthalten. Sie können kleinere Mengen, vorzugsweise bis zu 5 Gew.-%, bezogen auf Kautschuk, vernetzend wirkender ethylenisch ungesättigter Monomeren einpolymerisiert enthalten. Solche Vernetzer sind z.B. Alkylendiol-di(meth)-acrylate, Polyester-di-(meth)-acrylate, Divinylbenzol, Trivinylbenzol, Triallylcyanurat, Allyl-(meth)-acrylat, Butadien und Isopren. Geeignete Acrylatkautschuke sind auch Produkte, die

einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und einen Acrylatkautschukmantel enthalten. Andere geeignete Kautschuke sind z.B. EPDM-Kautschuke, also Kautschuke aus Ethylen, Propylen und einem unkonjugierten Dienmonomer sowie Silikonkautschuke mit pfropfaktiven Stellen, wie z.B. in den DE 36 31 540 und 36 31 539 beschrieben.

Bevorzugte Kautschuke zur Herstellung der Pfropfpolymerisate B.* sind Dien- und Alkylacrylatkautschuke.

Die Kautschuke liegen im Pfropfpolymerisat B* in Form wenigstens partiell vernetzter Teilchen eines mittleren Durchmessers von 0,05 bis 5 µm, insbesondere 0,075 bis 1 µm vor. Die Pfropfpolymerisate B* können durch radikalische Pfropfpolymerisation der eingangs definierten Monomerengemisch B.*2 in Gegenwart der zu pfropfenden Kautschuke B.*1 hergestellt werden. Die Monomerengemische B.*2 bestehen vorzugsweise aus 91 bis 98 Gew.-Tl. B.*2.1 und 2 bis 9 Gew.-Tl. B.*2.2. Bevorzugte Komponente B.*2.1 ist Styrol, bevorzugte Komponente B.*2.2 ist Acrylnitril.

Bevorzugte Herstellungsverfahren für die Pfropfpolymerisate B* sind Emulsions-, Masse-, Lösungs-oder Suspensionspolymerisation.

Besonders bevorzugte Pfropfpolymerisate B* sind ABS-Pfropfpolymerisate. Als kernsubstituierte Styrole seien Halogenstyrole und p-Methylstyrol erwähnt.

Bevorzugte Copolymerisate C* sind solche aus wenigstens einem der Monomeren Styrol, α-Methylstyrol, kernsubstituierten Styrol gemäß C.*1 mit wenigstens einem der Monomeren Acrylnitril, Methacrylnitril, Methylmethacrylat, Maleinsäureanhydrid, N-subst.-Maleinimid gemäß C.*2.

Copolymerisate C* entstehen häufig bei der Pfropfpolymerisation zur Herstellung der Komponente B* als Nebenprodukte, besonders dann, wenn große Mengen Monomere auf kleine Mengen Kautschuk gepfropft werden.

Die Copolymerisate C* sind harzartig, thermoplastisch und kautschukfrei. Besonders bevorzugte Copolymerisate C* sind solche aus Styrol und/oder α-Methylstyrol mit Acrylnitril und gegebenenfalls mit Methylmethacrylat.

Besonders bevorzugte Gewichtsverhältnisse im thermoplastischen Copolymerisat C* sind 91 bis 98 Gew.-% C.*1 und 2 bis 9 Gew.-%.C*2. Bevorzugte Komponente C*.1 ist Styrol, bevorzugte Komponente C*.2 ist Acrylnitril.

Die Copolymerisate C* können durch radikalische Polymerisation, insbesondere durch Emulsions-, Suspensions-, Lösungs- oder Massepolymerisation hergestellt werden. Sie besitzen vorzugsweise Molekulargewichte $\overline{M}_w$ (Gewichtsmittel, ermittelt durch Lichtstreuung oder Sedimentation) von 15 000 bis 200 000.

In den erfindungsgemäßen Formmassen, enthaltend A. + B. + gegegebenenfalls C. sind mindestens 10 Gew.-%, vorzugsweise mindestens 50 Gew.-%, besonders bevorzugt 100 Gew.-% der Komponente B. durch B* und/oder gegebenenfalls mindestens 10 Gew.-%, vorzugsweise mindestens 50 Gew.-%, besonders bevorzugt 100 Gew.-% der Komponente C. durch C* ersetzt.

Besonders bevorzugte Formmassen enthalten demzufolge die Komponenten A. + B* und gegebenenfalls C*, in denen die Pfropfhülle B*.2 und gegebenenfalls das Copolymerisat C* aus jeweils 91 bis 98 Gew.-Tl. Styrol und 2 bis 9 Gew.-Tl. Acrylnitril aufgebaut sind.

Die erfindungsgemäßen Formmassen, enthaltend die Komponenten A., B. und gegebenenfalls C., wobei B. und gegebenenfalls C. ganz oder teilweise durch B* und/oder C* ersetzt sind und gegebenenfalls weitere Zusätze, können hergestellt werden, indem man ihre Bestandteile in bekannter Weise vermischt und bei Temperaturen von 200 bis 330 °C in üblichen Mischvorrichtungen, wie Innenknetern, Extrudern oder Doppelwellenschnecken, schmelzcompoundiert oder schmelzextrudiert.

Gegenstand der Erfindung ist auch ein Verfahren zur Herstellung von thermoplastischen Formmassen, enthaltend die Komponenten A., B. und gegebenenfalls C., wobei B. und gegebenenfalls C. ganz oder teilweise durch B* und/oder C* ersetzt sind und gegebenenfalls Stabilisatoren, Pigmente, Entformungemittel, Flammschutzmittel und/oder Antistatika, das dadurch gekennzeichnet ist, daß man die Komponenten in bekannter Weise vermischt und danach bei Temperaturen von 200 bis 330 °C in üblichen Mischvorrichtungen schmelzcompoundiert oder schmelzextrudiert.

Die Komponenten können in bekannter Weise sowohl sukzessive als auch simultan vermischt werden bei etwa 20 °C (Raumtemperatur) und auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehauseteile jeder Art (z.B. für Haushaltsgeräte, wie Saftpressen, Kaffeemaschinen, Mixer) oder Abdeckplatten für Bauten und Teile für Kraftfahrzeuge. Sie werden außerderdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengrößen bedeutet immer mittlere Teilchendurchmesser $d_{50}$, ermittelt durch Ultrazentrifugenmessungen nach W. Scholten et al., Kolloid-Z. u. Z. polymere 250 (1972), 782 - 796.

1 Beispiele

Eingesetzte Polykondensate und Polymerisate

A.
Lineares Polycarbonat auf Basis Bisphenol A mit einer relativen Lösungsviskosität $\eta_{rel}$ von 1,26 bis 1,28, gemessen in $CH_2Cl_2$ bei 25 °C und in einer Konzentration von 0,5 g/100 ml.

B., B* Pfropfpolymerisate
SAN-Pfropfpolymerisate von Styrol/Acrylnitril-Gemischen (Anteil und Gewichtsverhältnis s. Tabelle 1) auf teilchenförmiges Polybutadien mit einem mittleren Teilchendurchmesser ($d_{50}$) von 0,4 µm, erhalten durch Emulsionspolymerisation.

Tabelle 1

| Zusammensetzung der Pfropfpolymerisate | | | | |
|---|---|---|---|---|
| Propfpolymerisat | Polybutadien | Styrol (S) | Acrylnitril (ACN) | S/ACN |
| | | [Gew.-%] | | |
| B I | 50 | 36 | 14 | 72 : 28 |
| B II | 50 | 40 | 10 | 80 : 20 |
| B III | 75 | 18 | 7 | 72 : 28 |
| B IV | 75 | 20 | 5 | 80 : 20 |
| B*I | 50 | 45 | 5 | 90 : 10 |
| B*II | 50 | 47,5 | 2,5 | 95 : 5 |
| B*III | 75 | 22,5 | 2,5 | 90 : 10 |
| B*IV | 75 | 23,75 | 1,25 | 95 : 5 |

C., C* Copolymerisate
Styrol/Acrylnitril-Copolymerisate (Zusammensetzung und Viskositätskennzahl s. Tabelle 2), hergestellt durch Massepolymerisation.

Tabelle 2

| Zusammensetzung der Copolymerisate | | | |
|---|---|---|---|
| Copolymerisat | Styrol | Acrylnitril | L-Wert[1)] |
| | [Gew.-%] | | |
| C I | 72 | 28 | 55 |
| C II | 81 | 19 | 74 |
| C*I | 90 | 10 | 58 |
| C*II | 94 | 6 | 56 |

[1)] Der L-Wert ist definiert als spezifische Viskosität einer Polymerlösung in Dimethylformamid (gemessen bei 20 °C) bei der Konzentration 5 g/l, dividiert durch diese Konzentration.

2 Herstellung und Prüfung der Formmassen

Die Compoundierung der Komponenten A., B. (B*) und C. (C*) erfolgte auf einem 3-1-Innenkneter bei Temperaturen von 200 bis 220 °C.

Die Herstellung der Formkörper erfolgte auf einer Spritzgießmaschine bei 260 °C.

Die Bestimmung der Kerbschlagzähigkeit nach Methode ISO R 180 erfolgte an Prüfkörpern der Abmessung 80 x 10 x 4 mm bei Raumtemperatur und bei -20 °C.

Wie die nachstehende Tabelle 3 zeigt, besitzen die erfindungsgemäßen Formmassen ein höheres Niveau der Kerbschlagzähigkeit als vergleichbare Zusammensetzungen des Stands der Technik. Am ausgeprägtesten ist dieser Vorteil im erfindungsgemäß bevorzugten Bereich (< 10 % Acrylnitril in der Pfropfhülle von B* und im Copolymerisat C*), wie Beispiele 4 und 9 belegen.

Tabelle 3 Zusammensetzung und Eigenschaften der Formmassen

| Beispiel | Komponenten [Gew. Teile] | | | | | | | | | | | | | Kerbschlagzähigkeit [kJ/m²] | |
|---|---|---|---|---|---|---|---|---|---|---|---|---|---|---|---|
| | A | B I | B II | B III | B IV | B*I | B*II | B*III | B*IV | C I | C II | C*I | C*II | RT | -20° C |
| 1 1) | 60 | 24 | | | | | | | | 16 | | | | 51 | 47 |
| 2 1) | 60 | | 24 | | | | | | | | 16 | | | 53 | 46 |
| 3 | 60 | | | | | 24 | | | | | | 16 | | 55 | 63 |
| 4 | 60 | | | | | | 24 | | | | | | 16 | 78 | 73 |
| 5 1) | 60 | 24 | | | | | | | | | | 16 | | 66 | 47 |
| 6 1) | 60 | | | 18 | | | | | | 22 | | | | 54 | 48 |
| 7 1) | 60 | | | | 18 | | | | | | 22 | | | 53 | 45 |
| 8 | 60 | | | | | | | 18 | | | | 22 | | 79 | 89 |
| 9 | 60 | | | | | | | | 18 | | | | 22 | 93 | 104 |

1) Vergleichsversuch

## Patentansprüche

1. Thermoplastische Formmassen, bestehend aus

A.
5 bis 98 Gew.-Tl. eines aromatischen Polycarbonats und/oder eines aromatischen Polyestercarbonats und/oder eines aromatischen Polyesters, und
B.
2 bis 70 Gew.-Tl. eines oder mehrerer Pfropfpolymerisate aus
B.1
10 bis 95 Gew.-Tl. einer vernetzten, teilchenförmigen elastomeren Pfropfgrundlage mit einem durchschnittlichen Teilchendurchmesser ($d_{50}$-Wert) von 0,05 bis 5 µm und einer Glasübergangstemperatur ≦10 ° C, und
B.2
90 bis 5 Gew.-Tl. einer Pfropfauflage aus Vinylmonomerpolymerisat, wobei die Pfropfauflage erhalten wurde durch Pfropfpolymerisation einer Monomermischung aus
B.2.1
50 bis 85 Gew.-Tl. Styrol, α-Methylstyrol, kernsubstituiertem Styrol, Methylmethacrylat, oder Mischungen daraus, und
B.2.2
50 bis 15 Gew.-Tl. (Meth)-Acrylnitril, Methylmethacrylat, N-substiuiertem Maleinimid, oder Mischungen daraus, und
C.
0 bis 80 Gew.-Tl. eines thermoplastischen Copolymerisats aus
C.1
50 bis 85 Gew.-Tl. Styrol, α-Methylstyrol, kernsubstituiertem Styrol, Methylmethacrylat, oder Mischungen daraus, und
C.2
50 bis 15 Gew.-Tl. (Meth)-Acrylnitril, Methylmethacrylat, N-substituiertem Maleinimid, oder Mischungen daraus, wobei die Summe aus A. und B. und gegebenenfalls C. jeweils 100 Gew.-Tl. beträgt,

dadurch gekennzeichnet, daß in den Formmassen A. bis C. mindestens eine der Maßnahmen a. und b. erfüllt ist:

a.
mindestens 10 Gew.-% der Komponente B. ist ersetzt durch ein Pfropfpolymerisat B* aus
B.*1
10 bis 95 Gew.-Tl. einer vernetzten, teilchenförmigen elastomeren Pfropfgrundlage mit einem durchschnittlichen Teilchendurchmesser ($d_{50}$-Wert) von 0,05 bis 5 µm und einer Glasübergangstemperatur ≦10 ° C und
B.*2
90 bis 5 Gew.-Tl. einer Pfropfauflage aus Vinylmonomerpolymerisat, wobei die Pfropfauflage erhalten wurde durch Pfropfpolymerisation einer Monomermischung aus
B.*2.1
86 bis 99,5 Gew.-Tl. Styrol, α-Methylstyrol, kernsubstituiertem Styrol, oder Mischungen daraus, und
B.*2.2
0,5 bis 14 Gew.-Tl. (Meth)-Acrylnitril, Methylmethacrylat, N-substituiertem Maleinimid, oder Mischungen daraus.
b.
mindestens 10 Gew.-% der Komponente C. ist ersetzt durch ein thermoplastisches Copolymerisat C* aus
C.*1
86 bis 99,5 Gew.-Tl. Styrol, α-Methylstyrol, kernsubstituiertem Styrol, oder Mischungen daraus und
C.*2
0,5 bis 14 Gew.-Tl. (Meth)-Acrylnitril, Methylmethacrylat, N-substituiertem Maleinimid, oder Mischungen daraus.

**2.** Thermoplastische Formmassen gemäß Anspruch 1, dadurch gekennzeichnet, daß die Komponente B. zu mindestens 50 Gew.-% durch die Komponente B* ersetzt ist.

3. Thermoplastische Formmassen gemäß Ansprüchen 1 und 2, dadurch gekennzeichnet, daß die Komponente C. zu mindestens 50 Gew.-% durch die Komponente C* ersetzt ist.

4. Thermoplastische Formmassen gemäß Anspruch 1, dadurch gekennzeichnet, daß die Komponente A. ein Polycarbonat auf Basis von Bisphenol A. ist.

5. Thermoplastische Formmassen gemäß Anspruch 1, dadurch gekennzeichnet, daß in ihnen Komponenten B. und C. vollständig ersetzt sind durch Komponenten B* und C*, und daß die Komponenten B.*2.1 und C.*1 Styrol, und die Komponenten B.*2.2 und C.*2 Acrylnitril sind.

6. Thermoplastische-Formmassen gemäß Anspruch 1, dadurch gekennzeichnet, daß sie zusätzlich mindestens einen Zusatz aus der Gruppe der Stabilisatoren, Pigmente, Fließhilfsmittel, Entformungsmittel, Flammschutzmittel und/oder Antistatika enthalten.

7. Verfahren zur Herstellung der Formmassen gemäß der Ansprüche 1 bis 5, dadurch gekennzeichnet, daß man die Komponenten A., B. (B*) und gegebenenfalls C/(C*) in bekannter Weise vermischt und danach bei Temperaturen von 200 bis 330 °C in gebräuchlichen Aggregaten schmelzcompoundiert oder schmelzextrudiert.

8. Verfahren zur Herstellung der Formmassen des Anspruches 6 gemäß Anspruch 7, dadurch gekennzeichnet, daß man mindestens einen Zusatz aus der Gruppe der Stabilisatoren, Pigmente, Fließmittel, Entformungsmittel, Flammschutzmittel und/oder Antistatika einbezieht.

**Claims**

1. Thermoplastic moulding compounds consisting of

A.

5 to 98 parts by weight of an aromatic polycarbonate and/or an aromatic polyester carbonate and/or an aromatic polyester and

B.

2 to 70 parts by weight of one or more graft polymers of

B.1

10 to 95 parts by weight of a crosslinked, particulate elastomeric graft base having an average particle diameter ($d_{50}$ value) of 0.05 to 5 µm and a glass transition temperature of ≦10 °C and

B.2

90 to 5 parts by weight of a graft shell of a vinyl monomer polymer, the graft shell having been obtained by graft polymerization of a monomer mixture of

B.2.1

50 to 85 parts by weight of styrene, α-methyl styrene, nucleus-substituted styrene, methyl methacrylate or mixtures thereof and

B.2.2

50 to 15 parts by weight of (meth)acrylonitrile, methyl methacrylate, N-substituted maleic imide or mixtures thereof, and

C.

0 to 80 parts by weight of a thermoplastic copolymer of

C.1

50 to 85 parts by weight of styrene, α-methyl styrene, nucleus-substituted styrene, methyl methacrylate or mixtures thereof and

C.2

50 to 15 parts by weight of (meth)acrylonitrile, methyl methacrylate, N-substituted maleic imide or mixtures thereof, the sum of the parts by weight of A. and B. and optionally C. always amounting to 100 parts by weight,

characterized in that, in the moulding compounds A. to C., at least one of the conditions a. and b. is satisfied:

a.

at least 10% by weight of component B. is replaced by a graft polymer B.* of

B.*1

10 to 95 parts by weight of a crosslinked, particulate, elastomeric graft base having an average

particle diameter ($d_{50}$ value) of from 0.05 to 5 µm and a glass transition temperature of ≦10 °C and

B.*2

90 to 5 parts by weight of a graft shell of vinyl monomer polymer, the graft shell having been obtained by graft polymerization of a monomer mixture of

B.*2.1

86 to 99.5 parts by weight of styrene, α-methyl styrene, nucleus-substituted styrene or mixtures thereof and

B.*2.2

from 0.5 to 14 parts by weight of (meth) acrylonitrile, methyl methacrylate, N-substituted maleic imide or mixtures thereof;

b.

at least 10% by weight of component C is replaced by a thermoplastic polymer C* of

C.*1

86 to 99.5 parts by weight of styrene, α-methyl styrene, nucleus-substituted styrene or mixtures thereof and

C.*2

0.5 to 14 parts by weight of (meth)acrylonitrile, methyl methacrylate, N-substituted maleic imide or mixtures thereof.

**2.** Thermoplastic moulding compounds as claimed in claim 1, characterized in that at least 50% by weight of component B. is replaced by component B*.

**3.** Thermoplastic moulding compounds as claimed in claims 1 and 2, characterized in that at least 50% by weight of component C. is replaced by component C*.

**4.** Thermoplastic moulding compounds as claimed in claim 1, characterized in that component A. is a polycarbonate based on bisphenol A.

**5.** Thermoplastic moulding compounds as claimed in claim 1, characterized in that, in the thermoplastic moulding compounds, components B. and C. are completely replaced by components B* and C* and in that components B.*2.1 and C.*1 are styrene and components B.*2.2 and C.*2 are acrylonitrile.

**6.** Thermoplastic moulding compounds as claimed in claim 1, characterized in that they additionally contain at least one addition from the group consisting of stabilizers, pigments, flow aids, mould release agents, flameproofing agents and/or antistatic agents.

**7.** A process for the production of the moulding compounds claimed in claims 1 to 5, characterized in that components A., B. (B*) and, optionally, C/(C*) are mixed in known manner and the resulting mixture is melt-compounded or melt-extruded in standard units at temperatures in the range from 200 to 330 °C.

**8.** A process as claimed in claim 7 for the production of the moulding compounds claimed in claim 6, characterized in that at least one addition from the group consisting of stabilizers, pigments, flow aids, mould release agents, flameproofing agents and/or antistatic agents is incorporated.

## Revendications

**1.** Matières à mouler thermoplastiques consistant en :

A.

5 à 98 parties en poids d'un polycarbonate aromatique et/ou d'un polyester-carbonate aromatique et/ou d'un polyester aromatique et

B.

2 à 70 parties en poids d'un ou plusieurs polymères greffés de

B.1

10 à 95 parties en poids d'un support de greffage élastomère réticulé en particules de diamètre moyen (valeur $d_{50}$) 0,05 à 5 µm, et ayant une température de transition du second ordre ≦ à 10 °C et

B.2
90 à 5 parties en poids d'une greffe d'un polymère de monomères vinyliques, cette greffe ayant été obtenue par polymérisation greffée d'un mélange de monomères consistant en :
B.2.1
50 à 85 parties en poids de styrène, d'α-méthylstyrène, d'un styrène substitué dans le noyau, de méthacrylate de méthyle ou leurs mélanges et
B.2.2
50 à 15 parties en poids de (méth)acrylonitrile, de méthacrylate de méthyle, d'un maléimide substitué à l'azote ou leurs mélanges, et
C.
0 à 80 parties en poids d'un copolymère thermoplastique de
C.1
50 à 85 parties en poids de styrène, d'α-méthylstyrène, d'un styrène substitué dans le noyau, de méthacrylate de méthyle ou leurs mélanges et
C.2
50 à 15 parties en poids de (méth)acrylonitrile, de méthacrylate de méthyle, d'un maléimide substitué à l'azote ou leurs mélanges, la somme de A et B et le cas échéant C représentant dans tous les cas 100 parties en poids,

caractérisées en ce que, dans les matières à mouler A à C, au moins une des conditions a et b est satisfaite :

a.
au moins 10 % en poids du composant B sont remplacés par un polymère greffé B* de
B.*1
10 à 95 parties en poids d'un support de greffage élastomère réticulé en particules de diamètre moyen (valeur $d_{50}$) 0,05 à 5 µm et à une température de transition du second ordre inférieure ou égale à 10 °C et
B.*2
90 à 5 parties en poids d'une greffe d'un polymère de monomères vinyliques, cette greffe ayant été obtenue par polymérisation greffée d'un mélange de monomères consistant en :
B.*2.1
86 à 99,5 parties en poids de styrène, d'α-méthylstyrène, d'un styrène substitué dans le noyau ou leurs mélanges et
B.*2.2
0,5 à 14 parties en poids de (méth)acrylonitrile, de méthacrylate de méthyle, d'un maléimide substitué à l'azote ou leurs mélanges.

b.
au moins 10 % en poids du composant C sont remplacés par un copolymère thermoplastique C* de
C.*1
86 à 99,5 parties en poids de styrène, d'α-méthylstyrène, d'un styrène substitué dans le noyau ou leurs mélanges et
C.*2
0,5 à 14 parties en poids de (méth)acrylonitrile, de méthacrylate de méthyle, d'un maléimide substitué à l'azote ou leurs mélanges.

**2.** Matières à mouler thermoplastiques selon revendication 1, caractérisées en ce que le composant B est remplacé pour au moins 50 % en poids par le composant B*.

**3.** Matières à mouler thermoplastiques selon les revendications 1 et 2, caractérisées en ce que le composant C est remplacé pour au moins 50 % en poids par le composant C*.

**4.** Matières à mouler thermoplastiques selon revendications 1, caractérisées en ce que le composant A est un polycarbonate à base du bisphénol A.

**5.** Matières à mouler thermoplastiques selon revendication 1, caractérisées en ce que leurs composants B et C sont remplacés en totalité par les composants B* et C* et en ce que les composants B.*2.1 et C.*1 consistent en styrène et les composants B.*2.2 et C.*2 consistent en acrylonitrile.

**6.** Matières à mouler thermoplastiques selon revendication 1, caractérisées en ce qu'elles contiennent en outre au moins un additif choisi parmi les stabilisants, les pigments, les produits auxilliaires fluidifiants, les agents de démoulage, les agents ignifugeants et/ou les agents antistatiques.

**7.** Procédé de préparation des matières à mouler selon les revendications 1 à 5, caractérisé en ce que l'on mélange de manière connue les composants A, B (B*) et le cas échéant C/(C*) puis on fait passer à l'état fondu à des températures de 200 à 330 °C dans des appareils usuels de mélange ou d'extrusion.

**8.** Procédé de préparation des matières à mouler de la revendication 6 selon revendication 7, caractérisé en ce que l'on incorpore au moins un additif choisi parmi les stabilisants, les pigments, les agents fluidifiants, les agents de démoulage, les agents ignifugeants et/ou les agents antistatiques.